# EUROPEAN PATENT SPECIFICATION

(11) **EP 2 958 668 B1**
(45) Date of publication and mention of the grant of the patent: **07.12.2016**
(21) Application number: 14715663.2
(22) Date of filing: 21.02.2014
(51) Int. Cl.: B01F 5/10, B01F 7/02, B01F 15/00, B01F 15/02, B01F 15/04, B01F 15/06, C12G 1/02, C12M 1/00

(54) **MULTI-PURPOSE MACHINE FOR PREPARING, MEASURING OUT AND CONTROLLING PROCESS ADDITIVES AND ADJUVANTS IN WINE PRODUCTION**
MEHRZWECKMASCHINE ZUR HERSTELLUNG, DOSIERUNG UND STEUERUNG VON PROZESSZUSATZSTOFFEN UND HILFSSTOFFEN IN DER WEINHERSTELLUNG
MACHINE À OBJECTIFS MULTIPLES POUR LA PRÉPARATION, LA MESURE ET LA COMMANDE D'ADDITIFS DE TRAITEMENT ET D'ADJUVANTS DANS LA PRODUCTION DE VIN

(30) Priority: 22.02.2013 IT RM20130102
(43) Date of publication of application: 30.12.2015
(73) Proprietor: Idrotec Italia S.r.l., Ortona (IT)
(72) Inventor: BUCCI, Gianni, I-65128 Pescara (IT); CARINCI, Valerio, I-66014 Crecchio (IT); DI TOTTO, Gianluca, I-66014 Crecchio (IT)
(74) Representative: Bosman, Cesare
(86) International application number: PCT/IB2014/059168
(87) International publication number: WO 2014/128665

(56) References cited:
- EP-A1- 1 167 514
- DE-U1- 29 909 434
- GB-A- 1 480 911
- US-A1- 2006 251 778

## Description

### TECHNICAL FIELD

The present invention concerns a multi-purpose machine for preparing, measuring out and controlling process additives and adjuvants in wine production.

### BACKGROUND ART

Many of the processes involved in wine production, such as the rehydration and revitalization of yeasts, hydration and measuring out of fining agents and dissolution and measuring out of stabilisers, conditioners and supplements, for example, are still performed manually and are based on the professional skills and reliability of the operator in charge.

In particular, the distinguishing characteristics of many of these processes are the quantity of product used, its degree of dilution and the process temperature and time.

Furthermore, often the manual character of the processes means that they are carried out with tools unsuited to the quality and delicacy of said processes.

Another fundamental aspect of the above-mentioned processes concerns the preparation instructions for the single products, also of the same type. Obviously, the manual management of this multitude of variables has numerous limits, both operative and functional.

As is well-known to a person skilled in the art, incorrect observance of one of the process parameters can negatively affect the end result with consequent damage to productivity. In particular, in the case of large quantities of product to be used in the single process, whether it is a fermentation process by yeasts and bacteria or a flocculation process by clarifying agents, the risk arising from a strictly manual operation is that of not performing total re-hydration of the product or accurate dissolution thereof, resulting in excessive use of the product in addition to non-uniformity of the treatment, triggering different kinetics in the process. In other words, the manual nature of the above processes entails the risk of an inappropriate and/or excessive use of chemicals with obvious drawbacks in terms of productivity and certainty of the product complying with specific production requirements.

So far, in the wine-making sector, innovations have been based mainly on research into and development of new chemical or biotechnological specialties, but there has never been any great interest, except in rare cases, in developing and promoting the use of machinery or systems automated to varying degrees for preparing and measuring out said compounds in the production process.

Lastly, one of the shortcomings in the current production of wine relates to the lack of product traceability in some of the stages.

Document EP-A-1167514, discloses a multi-purpose machine for processes concerning the production of wine, which comprises a processing tank, a thermal conditioning assembly, a recirculation line for the recirculation of the substance being processed in the tank, a measuring-out assembly, which is suited to guarantee the correct amount of solid substance and of liquid substance to be inserted into the processing tank, a central control unit, which is suited to check the single conditions and to control the actions of the machine as a function of predetermined protocols; said recirculation line comprising a drawing branch comprising a recirculation pump. A first introduction branch having a discharge end extending inside the processing tank, and a second introduction branch having a discharge end that faces the inside of the processing tank; said measuring-out assembly comprising one or more additive tanks suited to house the products to be introduced into the processing tank for the specific processing procedure, a product introduction line suited to introduce the products, from the additive tanks, into the processing tank and comprising a measuring-out pump interfaced with the central control unit. A solvent introduction line is present to introduce solvents into the processing tank; said solvent introduction line comprising a cold water conduit. A temperature sensor is housed inside the processing tank and interfaced with said central control unit.

### DISCLOSURE OF INVENTION

The object of the present invention is to provide an automated machine able to carry out a plurality of processes relative to the production of wine and with technical characteristics such as to overcome the drawbacks of the known art.

The subject of the present invention is a multi-purpose machine for processes relative to the production of wine, the essential characteristics of which are described in claim 1, and the preferred and/or auxiliary characteristics of which are described in claims 2-8.

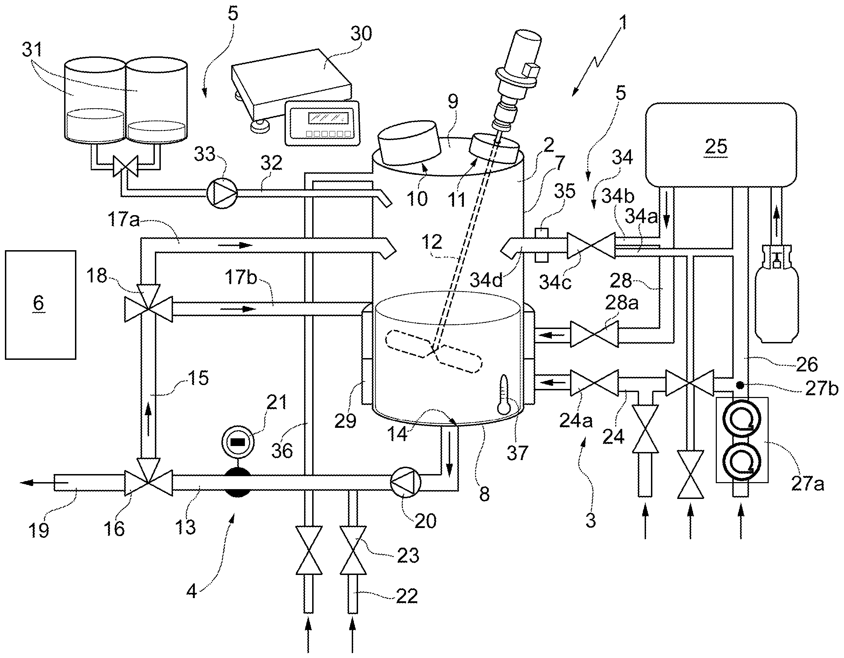

### BRIEF DESCRIPTION OF THE DRAWING

For a better understanding of the invention, an embodiment is described below for purely illustrative non-limiting purposes with the help of the figure of the accompanying drawing, which schematically illustrates the machine subject of the present invention.

### BEST MODE FOR CARRYING OUT THE INVENTION

In the figure the number 1 indicates as a whole the machine subject of the present invention. The machine 1 is supported by movement means known and not illustrated for the sake of simplicity, for example a trolley with wheels, so that it can be easily moved.

The machine 1 comprises a processing tank 2, a thermal conditioning assembly 3 arranged to act on a lower portion of the tank 2, a recirculation line 4 for recirculating the material being processed in the tank 2, a measuring-out assembly 5 suited to ensure the correct quantity of solid and liquid material to be placed in the tank 2 and a central control unit 6 suited to verify the single conditions and to control the actions of the machine as a function of predetermined protocols.

The tank 2 comprises a cylindrical lateral wall 7 closed at the bottom by a base wall 8 and at the top by a roof 9. In the roof 9 a first aperture 10 is obtained provided with closing means and suited to allow the loading of material, and a second aperture 11 which houses seal means crossed by a mixer 12, the terminal part of which is provided with blades for mixing the material contained in the tank 2.

In the lateral wall 7 a plurality of apertures are obtained for the passage of conduits for the introduction of solid and liquid products into the tank 2 useful for the specific processing being carried out as will be described below.

The recirculation line 4 comprises a drawing branch 13 connected to an aperture 14 obtained in the centre of the base wall 8, an intermediate branch 15 connected to the drawing branch 13 by means of a valve 16 and two introduction branches 17a and 17b connected to the intermediate branch 15 by means of a three-way valve 18 and arranged to cross the lateral wall 7 to replenish the cylinder 2 with the material withdrawn by the drawing branch 13. The valve 16 is also a three-way valve since it is connected not only to the drawing branch 13 and to the intermediate branch 15 but also to a discharge conduit 19.

The recirculation line 4 comprises a pump 20 arranged to act along the drawing branch 13, a mass flow meter 21 arranged along the drawing branch 13 downstream of the volumetric pump 20, and a connection 22 provided with its own valve 23 and suited to introduce compressed air along the drawing branch 13 between the pump 20 and the mass flow meter 21 in order to guarantee that the product is completely discharged, therefore without part of it remaining on the walls of the piping.

The mass flow meter 21 has a technology based on the Coriolis principle, and allows correct operation with high viscosity and multiphase liquids, with a solids and gases content. The mass flow meter 21, in addition to measuring the instantaneous and totalised flow rate according to the settings, is able to provide accurate measurement of the density (up to +/- 0.0005 g/cm³) as a control during the process in progress, measure the concentration of solutions, suspensions and emulsions as a process quality control and deliver flow rates with reference density for traceability in the process/measuring-out. The knowledge of these parameters allows the machine to manage functions never considered before. Measurement of the density detects the presence of sugars, controlling the fermentation activity and thus allowing the machine to send an alarm signal in the event of non-starting or stopping of the alcoholic fermentation, in addition to managing more complex protocols as in the case of fermentation starters. In this way unproductive process delays are avoided and it is possible to intervene immediately to restore correct performance of the process.

The introduction branch 17a has a discharge end extending inside the tank 2 and comprises a diffuser known and not illustrated for the sake of simplicity. The introduction branch 17b has a discharge end that faces the inside of the tank 2 in a position substantially flush with the lateral wall 7 and shaped so as to create a laminar flow tangential to the lateral wall 7.

The thermal conditioning assembly 3 comprises the connection to a closed circuit of glycol water 24 (shown only partly) and a boiler 25 fed with water at ambient temperature by means of feed pipe 26 on which a water treatment device 27a and a conductivity sensor 27b interfaced with the central control unit 6 act in series. A hot water pipe 28 leads out of the boiler 25.

The thermal conditioning assembly 3 comprises a temperature sensor 37 arranged to read the temperature in a bottom portion of the tank 2 and interfaced with the central control unit 6, and a thermal conditioning jacket 29 arranged around a lower portion of the lateral wall 7 of the tank 2 and suited to receive the hot water coming from the boiler 25 through the piping 28 and the cold water of the closed circuit of glycol water 24.

Respective valves 28a and 24a act on the piping 28 and on the closed circuit of glycol water 24; said valves are controlled by the central control unit 6 and determine the inlet of hot water and cold water respectively into the thermal conditioning jacket 29.

Alternatively, in the thermal conditioning jacket 29 the cold water can come from the piping 26 instead of from the closed circuit of glycol water 24. Said alternative depends on the ambient temperature conditions.

The presence of the closed circuit of glycol water 24 allows the use of water at considerably lower temperatures for cooling the tank 2 than those that can be obtained by use of the water from the mains supply.

According to a preferred embodiment, the water treatment device 27a comprises safety filtering at 50 *µ*m and a two-stage treatment by means of a mixture of copper-zinc granular elements and activated carbon. The copper-zinc mixture not only reduces by 98-99% the presence of heavy metals soluble in water and other possible contaminants via oxide/reduction reactions, but also causes cell damage to pathogenic or in any case undesired microbiological organisms which, if present in the technological process, can inhibit or alter the growth of the biotechnological products to be processed.

For correct evaluation of the importance of the presence of the water treatment device 27a and the conductivity sensor 27b it should be specified that:
- an excess concentration of salts in the process water would reduce the effectiveness of the chemical treatment (for example less swelling of bentonite) or future stability of the wines with, for example, potential precipitation of calcium tartrate in the bottle;
- high concentrations of chlorine in the process water (as often occurs in normal water supplies) can jeopardize some applications such as the re-hydration of bacteria or yeasts, for example, through to the inhibition of said microorganisms. In particular, in the specific case of lactic bacteria, the technical data sheets of the producers clearly specify the complete absence of chlorine in the hydration water. There is therefore the risk of possible loss of the active product, with consequent extreme latency of the fermentation process, which in turn makes the wine subject to indigenous microbiological phenomena with the potential formation of undesired molecules such as volatile phenols (4-ethyl phenol, 4-ethyl guaiacol) and biogenic amines (mainly histamine), for example.

The measuring-out assembly 5 comprises a scale 30 interfaced with the central control unit 6 and suited to ensuring the exact quantity of material to be introduced into the tank 2 as established by the protocol and verified by the central control unit 6.

The measuring-out assembly 5 furthermore comprises one or more tanks 31 suited to house the additives to be introduced into the tank 2 for the specific processing and a product introduction line 32 suited to introduce the products present in the tanks 31 directly into the tank 2 crossing the lateral wall 7. The product introduction line 32 comprises a measuring-out diaphragm pump 33 interfaced with the central control unit 6 and suited to guarantee exact measuring out of the products intended to be introduced into the tank 2.

The measuring-out assembly 5 comprises a solvent introduction line 34, for introducing solvents such as water or wine, for example, inside the tank 2 crossing the lateral wall 7, and litre-counter devices 35 arranged to act directly on the solvent introduction line 34 and interfaced with the central control unit 6. In particular, the solvent introduction line 34 comprises a cold water conduit 34a connected to the pipe 26 and a hot water conduit 34b connected to the pipe 28. The pipes 34a and 34b converge in a thermostatic mixer 34c interfaced with the central control unit 6 and from which a terminal introduction conduit 34d extends on which the litre-counter device 35 acts.

The above solution allows purified water to be used as a solvent thanks to the water treatment device 27a and the conductivity sensor 27b and at the same time adjustment of the temperature according to the process to be performed thanks to the presence of the thermal mixer 34c.

The possibility of introducing into the tank water already at the desired temperature offers a great advantage in terms of process time and, therefore, productivity. In fact, in some machines in the known art, the water is introduced into the tank at ambient temperature and subsequently heated inside the tank.

The solvent introduction line 34 comprises a wine conduit 38 connected to the terminal introduction conduit 34d. The presence of the wine conduit allows wine to be introduced into the inside of the processing tank 2 as a solvent necessary for certain types of process.

Lastly, the machine 1 comprises an inert gas supply line 36 arranged to face directly towards the inside of the tank 2 to guarantee the inert atmosphere inside the tank 2 as required for some particular processes. The inert gas can be chosen from the group consisting of nitrogen, argon, carbon dioxide and mixtures thereof.

The possibility of having an inert atmosphere in the tank protects from oxidisation the wine or the water used as a solvent during the preparatory phase of some oxygen-sensitive protocols. In particular, the machine 1 can use the winery nitrogen supply or an on-board nitrogen cylinder.

The machine as described above is able to perform processes on dry substrates, in granules, liquids or in paste, such as re-hydration, revitalization and cell lysis of yeasts, for example, or hydration of the fining agents or dissolution of the stabilisers, conditioners and supplements.

The machine subject of the present invention in the wine-making sector represents the introduction of an advanced method of operation in winery processes, which favours the appropriate and limited use of chemicals in wine. Substantially, with the machine subject of the present invention, it is possible to optimise the effect of the chemical and biotechnological specialties (additives and adjuvants) in the treatment of wine, maximising the efficiency and effectiveness of the preparation to be introduced into the food process intended for human consumption.

The machine subject of the present invention ensures the producer certainty, uniformity and quality in the measuring out of chemicals, standardisation and traceability of the process in the production batch; purposely studied highly performing protocols and programmes with potential reduction of the quantities added and consequent improved management of costs.

The machine subject of the present invention allows control of the process parameters eliminating the empirical component of the manual work performed by the operator. In particular, the machine subject of the present invention provides a combination of hydraulic/mechanical/thermal action in order to reduce and standardise the preparation cycles of the active ingredient with consequent maximisation of efficiency.

The procedures established and guided by the central control unit are able to guide the operator in all protocols of the respective wine-making specialties used in the processes such as fermentation, clarification and stabilisation. The central control unit, via the program set, controls and manages all the equipment and instrumentation on board the machine, adjusting the operating conditions, the way in which the ingredients are combined, the dilution ratios, the combination of the hydraulic/mechanical/thermal action, and the rest and action times. In other words, it is possible to keep under control the preparation cycle in quantitative and qualitative terms, in order to trace the measuring out and guarantee in-process treatment quality The machine instrumentation controls all the parameters necessary to minimise all possibilities of error or inefficient measuring out, including weighing of the additive/adjuvant, control of the solvent base water conductivity, the quantity present in the tank independently of the presence of foam or stirring of the mass in dissolution, and the possibility of controlling the density of the solution and monitoring its evolution.

In the last analysis, it is important to underline the importance of being able to trace all the process parameters, permitting production batch historicisation and identification of the reference chain. This offers the great advantage of being able to trace back the relative procedural steps, allowing the technician/enologist a critical view of the cause-effect relationship.

## Claims

1. A multi-purpose machine (1) for processes concerning the production of wine, **characterised in that** it comprises a processing tank (2), a thermal conditioning assembly (3), a recirculation line (4) for the recirculation of the substance being processed in the tank (2), a measuring-out assembly (5), which is suited to guarantee the correct amount of solid substance and of liquid substance to be inserted into the processing tank (2), a central control unit (6), which is suited to check the single conditions and to control the actions of the machine as a function of predetermined protocols; said recirculation line (4) comprising a drawing branch (13) comprising a recirculation pump (20) and a mass flow meter (21) interfaced with said central control unit (6),
a first introduction branch (17a) having a discharge end extending inside the processing tank (2), and a second introduction branch (17b) having a discharge end that faces the inside of the processing tank (2) flush with a lateral wall (7) of the processing tank (2) and shaped so as to create a laminar flow tangential to the lateral wall (7) itself; said drawing branch (13) and said introduction branches (17a, 17b) being connected to one another by means of valves that are controlled by said central control unit (6); the thermal conditioning assembly (3) comprising a closed circuit of glycol water (24), a service water line (26, 28) comprising heating means (25), a temperature sensor (37) housed inside the processing tank (2) and interfaced with said central control unit (6), and a thermal conditioning jacket (29) arranged around a lower portion of the lateral wall (7) of the processing tank (2) and suited to receive hot water from the service water line (26, 28) and cold water from the closed circuit of glycol water (24) by means of respective introduction valves (28a, 24a) that are controlled by said central control unit (6); said measuring-out assembly (5) comprising one or more additive tanks (31) suited to house the products to be introduced into the processing tank (2) for the specific processing procedure, a product introduction line (32) suited to introduce the products, from the additive tanks (31), into the processing tank (2) and comprising a measuring-out diaphragm pump (33) interfaced with the central control unit (6) and a solvent introduction line (34) to introduce solvents into the processing tank (2); said solvent introduction line (34) comprising a cold water conduit (34a), a hot water conduit (34b), heating means (25), from which the hot water conduit (34b) extends, a thermostatic mixing valve (34c) interfaced with the central control unit (6) and into which the cold water conduit (34a) and the hot water conduit (34b) lead, a terminal introduction conduit (34d) extending from said thermostatic mixing valve (34c) and subject to the action of a litre-counting device (35) interfaced with the central control unit (6), and wine conduit connected to the terminal introduction conduit (34d) and adapted to introduce in use wine into the processing tank (2) as a solvent.

2. A multi-purpose machine (1) according to claim 1, **characterised in that** said recirculation line (4) comprises a discharge conduit (19), which is connected to said drawing branch (13) by means of a valve controlled by said central control unit (6).

3. A multi-purpose machine (1) according to claim 1 or 2, **characterised in that** it comprises a mixer (12) to mix the substance contained in the processing tank (2).

4. A multi-purpose machine (1) according to any of the previous claims, **characterised in that** the measuring-out assembly (5) comprises a scale (30), which is interfaced with the central control unit (6) and is suited to guarantee the exact amount of material to be introduced into the processing tank (2).

5. A multi-purpose machine (1) according to any of the previous claims, **characterised in that** the water treatment device (27) comprises a safety filtering at 50 *µ*m and a two-stage treatment by means of a mixture of copper-zinc powder and activated carbon powder.

6. A multi-purpose machine (1) according to any of the previous claims, **characterised in that** it comprises an inert gas feeding line (36), which is arranged so as to directly face the inside of the processing tank (2) in order to guarantee an inert atmosphere inside the processing tank (2) itself, since this is necessary for some particular processes.

7. A multi-purpose machine (1) according to any of the previous claims, **characterised in that** it comprises a plurality of wheels, which are arranged so as to support the rest of the machine (1) in order to easily move it.

8. A multi-purpose machine (1) according to any of the previous claims, **characterised in that** said heating means comprise a gas boiler (25), which is adapted to heat in use the water of the service water line (26, 28) in the closed thermal conditioning circuit of the jacket and the water of the solvent introduction line (34) with an open circuit.

## Patentansprüche

1. Mehrzweckmaschine (1) für Verfahren bezüglich der Weinherstellung, **dadurch gekennzeichnet, dass** sie aufweist: einen Verarbeitungsbehälter (2), eine Wärmebehandlungsanordnung (3), eine Rücklaufleitung für die Rückführung der Substanz, die in dem Behälter (2) verarbeitet wird, eine Dosierungsanordnung (5), die geeignet ist, die korrekte Menge an fester Substanz und an flüssiger Substanz, die in den Verarbeitungsbehälter (2) eingebracht werden sollen, sicherzustellen, eine zentrale Steuereinheit (6), die geeignet ist, die einzelnen Bedingungen zu prüfen und die Tätigkeiten der Maschine als eine Funktion vorgegebener Protokolle zu steuern; wobei die Rückführungsleitung (4) aufweist: einen Saugzweig (13), der eine Rückführungspumpe (20) und einen Massendurchflussmesser (21) aufweist, der an die zentrale Steuereinheit (6) angekoppelt ist, einen ersten Einleitungszweig (17a) mit einem Abgabeende, das sich ins Innere des Verarbeitungsbehälters (2) erstreckt, und einen zweiten Einleitungszweig (17b) mit einem Abgabeende, das bündig mit einer Seitenwand (7) des Verarbeitungsbehälters (2) dem Inneren des Verarbeitungsbehälters (2) zugewandt ist und derart geformt ist, dass eine laminare Strömung tangential an die Seitenwand (7) selbst erzeugt werden soll; wobei der Saugzweig (13) und die Einleitungszweige (17a, 17b) mit Hilfe von Ventilen, die durch die zentrale Steuereinheit (6) gesteuert werden, miteinander verbunden sind; wobei die Wärmebehandlungsanordnung (3) aufweist: einen geschlossenen Kreis mit Glykolwasser (24), eine Brauchwasserleitung (26, 28), die aufweist: eine Heizeinrichtung (25), einen im Inneren des Verarbeitungsbehälters (2) aufgenommenen Temperatursensor (37), der an die zentrale Steuereinheit (6) angekoppelt ist, und einen Wärmebehandlungsmantel (29), der um einen unteren Abschnitt der Seitenwand (7) des Verarbeitungsbehälters (2) angeordnet ist und geeignet ist, mittels jeweiliger Einleitungsventile (28a, 24a), die von der zentralen Steuereinheit (6) gesteuert werden, heißes Wasser von der Brauchwasserleitung (26, 28) und kaltes Wasser von dem geschlossenen Kreis für Glykolwasser (24) zu empfangen; wobei die Dosierungsanordnung (5) aufweist: einen oder mehrere Zusatzbehälter (31), die geeignet sind, die Produkte, die in den Verarbeitungsbehälter (2) für das spezifische Verarbeitungsverfahren eingeleitet werden, aufzunehmen, eine Produkteinleitungsleitung (32), die geeignet ist, die Produkte aus den Zusatzbehältern (31) in den Verarbeitungsbehälter (2) einzuleiten und die eine Dosiermembranpumpe (33), die an die zentrale Steuereinheit (6) angekoppelt ist, und eine Lösungsmitteleinleitungsleitung (34) zum Einleiten von Lösungsmitteln in den Verarbeitungsbehälter (2) aufweist; wobei die Lösungsmitteleinleitungsleitung (34) aufweist: einen Kaltwasserkanal (34a), einen Heißwasserkanal (34b), eine Heizeinrichtung (25), von der sich der Heißwasserkanal (34b) erstreckt, ein Thermostatmischventil (34a), das an die zentrale Steuereinheit (6) angekoppelt ist und in das der Kaltwasserkanal (34a) und der Heißwasserkanal (34b) führen, einen Anschlusseinleitungskanal (34d), der sich von dem Thermostatmischventil (34c) erstreckt und der der Wirkung einer an die zentrale Steuereinheit (6) angekoppelten Literzählvorrichtung (35) ausgesetzt ist, und einen Weinkanal, der mit dem Anschlusseinleitungskanal (34d) verbunden ist und geeignet ist, im Gebrauch Wein als ein Lösungsmittel in den Verarbeitungsbehälter (2) einzuleiten.

2. Mehrzweckmaschine (1) nach Anspruch 1, **dadurch gekennzeichnet, dass** die Rückführungsleitung (4) einen Abgabekanal (19) aufweist, der mittels eines von der zentralen Steuereinheit (6) gesteuerten Ventils mit dem Abgabezweig (13) verbunden ist.

3. Mehrzweckmaschine (1) nach Anspruch 1 oder 2, **dadurch gekennzeichnet, dass** sie einen Mischer (12) aufweist, um die in dem Verarbeitungsbehälter (2) enthaltene Substanz zu mischen.

4. Mehrzweckmaschine (1) nach einem der vorhergehenden Ansprüche, **dadurch gekennzeichnet, dass** die Dosierungsanordnung (5) eine Waage (30) aufweist, die an die zentrale Steuereinheit (6) angekoppelt ist und geeignet ist, die exakte Menge an Material, die in den Verarbeitungsbehälter (2) eingeleitet werden soll, sicherzustellen.

5. Mehrzweckmaschine (1) nach einem der vorhergehenden Ansprüche, **dadurch gekennzeichnet, dass** die Wasserbehandlungsvorrichtung (27) eine Sicherheitsfilterung mit 50 µm und eine zweitstufige Behandlung mit Hilfe einer Mischung aus Kupfer-Zink-Pulver und Aktivkohlepulver aufweist.

6. Mehrzweckmaschine (1) nach einem der vorhergehenden Ansprüche, **dadurch gekennzeichnet, dass** sie eine Schutzgaszuführungsleitung (36) aufweist, die derart angeordnet ist, dass sie dem Inneren des Verarbeitungsbehälters (2) direkt zugewandt ist, um im Inneren des Verarbeitungsbehälters (2) selbst eine inerte Atmosphäre sicherzustellen, da dies für einige bestimmte Verfahren notwendig ist.

7. Mehrzweckmaschine (1) nach einem der vorhergehenden Ansprüche, **dadurch gekennzeichnet, dass** es mehrere Räder aufweist, die derart angeordnet sind, dass sie den Rest der Maschine (1) halten, um sie leicht zu bewegen.

8. Mehrzweckmaschine (1) nach einem der vorhergehenden Ansprüche, **dadurch gekennzeichnet, dass** die Heizeinrichtung einen Gasheizkessel (25) aufweist, der geeignet ist, im Gebrauch das Wasser der Brauchwasserleitung (26, 28) in dem geschlossenen Wärmebehandlungskreis des Mantels und das Wasser der Lösungsmitteleinleitungsleitung (34) mit einem offenen Kreis zu heizen.

## Revendications

1. Machine multifonction (1) pour des traitements concernant la production de vin, **caractérisée en ce qu'**elle comprend un réservoir de traitement (2), un ensemble de conditionnement thermique (3), une ligne de recirculation (4) pour la recirculation de la substance traitée dans le réservoir (2), un ensemble de mesure (5), qui est adapté à garantir la quantité correcte de substance solide et de substance liquide à introduire dans le réservoir de traitement (2), une unité de commande centrale (6) qui est adaptée à contrôler les conditions unitaires et à commander les actions de la machine en fonction de protocoles prédéterminés; ladite ligne de recirculation (4) comprenant une branche de soutirage (13) comprenant une pompe de recirculation (20) et un débitmètre massique (21) interfacé avec ladite unité de commande centrale (6), une première branche d'introduction (17a) présentant une extrémité de décharge qui s'étend à l'intérieur du réservoir de traitement (2), et une seconde branche d'introduction (17b) présentant une extrémité de décharge qui fait face à l'intérieur du réservoir de traitement (2) à fleur d'une paroi latérale (7) du réservoir de traitement (2) et configurée de manière à créer un écoulement laminaire tangentiel à la paroi latérale (7) elle-même; ladite branche de soutirage (13) et lesdites branches d'introduction (17a, 17b) étant connectées les unes aux autres au moyen de vannes qui sont commandées par ladite unité de commande centrale (6); l'ensemble de conditionnement thermique (3) comprenant un circuit fermé d'eau glycolée (24), une ligne d'eau de service (26, 28) comprenant des moyens de chauffage (25), un capteur de température (37) logé à l'intérieur du réservoir de traitement (2) et interfacé avec ladite unité de commande centrale (6), et une chemise de conditionnement thermique (29) agencée autour d'une partie inférieure de la paroi latérale (7) du réservoir de traitement (2) et adaptée à recevoir de l'eau chaude en provenance de la ligne d'eau de service (26, 28) et de l'eau froide en provenance du circuit fermé d'eau glycolée (24) au moyen de vannes d'introduction respectives (28a, 24a) qui sont commandées par ladite unité de commande centrale (6); ledit ensemble de mesure (5) comprenant ou ou plusieurs réservoir(s) d'additif (31) adaptés à contenir les produits à introduire dans le réservoir de traitement (2) pour la procédure de traitement spécifique, une ligne d'introduction de produit (32) adaptée à introduire les produits, à partir des réservoirs d'additif (31), dans le réservoir de traitement (2) et comprenant une pompe de mesure à diaphragme (33) interfacée avec l'unité de commande centrale (6) et une ligne d'introduction de solvant (34) pour introduire des solvants dans le réservoir de traitement (2), ladite ligne d'introduction de solvant (34) comprenant un conduit d'eau froide (34a), un conduit d'eau chaude (34b), des moyens de chauffage (25), à partir desquels le conduit d'eau chaude (34b) s'étend, une vanne de mélange thermostatique (34c) interfacée avec l'unité de commande centrale (6) et dans laquelle le conduit d'eau froide (34a) et le conduit d'eau chaude (34) conduisent, un conduit d'introduction terminal (34d) qui s'étend à partir de ladite vanne de mélange thermostatique (34c) et qui est soumis à l'action d'un dispositif de comptage de litres (35) interfacé avec l'unité de commande centrale (6), et un conduit de vin connecté au conduit d'introduction terminal (34d) et adapté, lors de l'utilisation, à introduire du vin dans le réservoir de traitement (2) en tant que solvant.

2. Machine multifonction (1) selon la revendication 1, **caractérisée en ce que** ladite ligne de recirculation (4) comprend un conduit de décharge (19) qui est connecté à ladite branche de soutirage (13) au moyen d'une vanne commandée par ladite unité de commande centrale (6).

3. Machine multifonction (1) selon la revendication 1 ou 2, **caractérisée en ce qu'**elle comprend un mélangeur (12) pour mélanger la substance contenue dans le réservoir de traitement (2).

4. Machine multifonction (1) selon l'une quelconque des revendications précédentes, caractérisée en ce l'ensemble de mesure (5) comprend une balance (30), qui est interfacée avec l'unité de commande centrale (6) et qui est adaptée à garantir la quantité exacte de matière à introduire dans le réservoir de traitement (2).

5. Machine multifonction (1) selon l'une quelconque des revendications précédentes, **caractérisée en ce que** le dispositif de traitement d'eau (27) comprend un filtre de sécurité à 50 µm et un traitement en deux étapes au moyen d'un mélange d'une poudre de cuivre et de zinc avec une poudre de charbon actif.

6. Machine multifonction (1) selon l'une quelconque des revendications précédentes, **caractérisée en ce qu'**elle comprend une ligne de fourniture de gaz inerte (36), qui est agencée de manière à faire face directement à l'intérieur du réservoir de traitement (2) dans le but de garantir une atmosphère inerte à l'intérieur du réservoir de traitement (2) lui-même, étant donné que cela est nécessaire pour certains traitements particuliers.

7. Machine multifonction (1) selon l'une quelconque des revendications précédentes, **caractérisée en ce qu'**elle comprend une pluralité de roues, qui sont agencées de manière à supporter le reste de la machine (1) dans le but de déplacer facilement celle-ci.

8. Machine multifonction (1) selon l'une quelconque des revendications précédentes, **caractérisée en ce que** lesdits moyens de chauffage comprennent une chaudière à gaz (25), qui est adaptée, lors de l'utilisation, à chauffer l'eau de la ligne d'eau de service (26, 28) dans le circuit de conditionnement thermique fermé de la chemise ainsi que l'eau de la ligne d'introduction de solvant (34) avec un circuit ouvert.
